# FASCICULE DE BREVET EUROPEEN

(11) **EP 2 814 698 B1**
(45) Date de publication et mention de la délivrance du brevet: **23.12.2015**
(21) Numéro de dépôt: 13704742.9
(22) Date de dépôt: 05.02.2013
(51) Int. Cl.: B60R 21/34, B62D 25/10, B62D 25/12

(54) **SYSTÈME DE MONTAGE D'UN CAPOT SUR UNE CAISSE DE VÉHICULE AUTOMOBILE**
SYSTEM ZUR MONTAGE EINER KÜHLERHAUBE AN EINER KRAFTFAHRZEUGKAROSSERIE
SYSTEM FOR MOUNTING A BONNET ON A MOTOR VEHICLE BODY

(30) Priorité: 13.02.2012 FR 1251321
(43) Date de publication de la demande: 24.12.2014
(73) Titulaire: Renault S.A.S., 92100 Boulogne-Billancourt (FR)
(72) Inventeur: BARREIRO, Emmanuel, F-78770 Villiers Le Mahieu (FR); LE ROY, Julien, F-78000 Versailles (FR)
(86) Numéro de dépôt international: PCT/EP2013/052235
(87) Numéro de publication internationale: WO 2013/120734

(56) Documents cités:
- DE-A1- 10 157 709
- DE-A1- 10 347 830
- DE-C1- 19 922 455
- US-A- 3 767 001

## Description

### Domaine technique de l'invention

L'invention concerne un système de montage d'un capot sur une caisse de véhicule automobile, ainsi qu'un véhicule automobile comprenant un capot monté grâce à un tel système de montage.

### État de la technique

Dans la construction d'un véhicule automobile, il est nécessaire généralement de monter et de positionner de très nombreux éléments fonctionnels, par exemple des éléments de carrosserie tels qu'un capot, par rapport à la caisse de structure du véhicule automobile.

Classiquement le capot destiné à occuper une position ouverte dans laquelle il ferme le compartiment moteur du véhicule prévoit un montage du capot par articulation, ce qui peut s'avérer problématique pour des raisons pratiques ou de coût notamment. Un tel montage est par exemple obtenu en prévoyant une articulation à pivotement entre le capot et une pièce appelée « support de capot » destinée à supporter le capot lorsqu'il est position fermée. Un tel support de capot est lui-même fixé à un élément de structure de la caisse. Le document FR-A1-2844499 et DE10157709 décrit par exemple une telle solution.

Ce type de support de capot participe au montage et au positionnement du capot, mais le maintien en position fermée (contre un mouvement d'ouverture vers le dessus) doit être obtenu à l'aide d'un élément de blocage complémentaire, déporté par rapport au support de capot.

Par ailleurs, d'autres systèmes prévoient un montage du capot par coulissement, comme décrit notamment dans le document DE 101 57 709.

Toutefois, ces solutions de montage par coulissement ou articulation restent complexes et relativement onéreuses, en sus des problèmes liés au mouvement d'articulation ou de coulissement.

### Objet de l'invention

La présente invention vise principalement à remédier à ces inconvénients de l'art antérieur en proposant un système de montage qui permette un montage et un positionnement du capot sur la caisse proposant une simplification et une réduction des coûts du montage du capot sur la caisse d'un véhicule automobile, tout en permettant d'améliorer la simplicité de maintien du capot en position fermée, contre un passage vers une position d'ouverture.

Selon l'invention, les éléments de positionnement sont configurés de sorte que leur coopération avec le capot est telle que les éléments de positionnement interdisent tout déplacement ayant une composante verticale, entre le support de capot et le capot.

Les éléments de positionnement peuvent comprendre un élément de butée inférieure destinée à immobiliser le capot vers le bas lorsqu'il est en position fermée.

Les éléments de positionnement peuvent comprendre au moins un premier organe destiné à s'engager par coulissement dans un deuxième organe solidaire du capot, lors du coulissement du capot par rapport au support de capot dans le premier sens.

L'un des premier et deuxième organes peut comprendre au moins une patte d'accrochage venant s'insérer, lors du coulissement du capot dans le premier sens, dans un logement de retenue équipant l'autre des premier et deuxième organes.

Le support de capot peut être constitué par une pièce monobloc.

Le support de capot peut comprendre des éléments de fixation destinés à fixer le support de capot sur au moins un élément associé d'une caisse de véhicule automobile, tel qu'un support d'aile et/ou une doublure d'un pied avant.

Le mécanisme de verrouillage peut comprendre au moins un verrou variant entre une position de blocage correspondant à la configuration de verrouillage et une position de déblocage correspondant à la configuration de déverrouillage.

Le verrou peut être muni d'une surface de came configurée pour coopérer avec un élément d'appui du capot de sorte à entraîner le coulissement du capot dans le premier sens lors du passage de la position de déblocage du verrou à la position de blocage.

La variation du verrou de la position de déblocage à la position de blocage, ou inversement, peut se faire par rotation du verrou.

Le verrou peut être muni d'un élément d'actionnement configuré de sorte à pouvoir commander la variation du verrou de la position de déblocage à la position de blocage, ou inversement.

Selon l'invention, un véhicule automobile comprend un tel système de montage et un capot monté sur une caisse du véhicule automobile grâce à un tel système de montage.

Le véhicule peut comprendre deux supports de capot décalés dans une direction transversale du véhicule de sorte à coopérer avec le capot au niveau de deux bords latéraux du capot.

Le mécanisme de verrouillage peut être disposé au niveau d'un bord avant du capot, à proximité de la calandre avant du véhicule.

Chaque verrou du mécanisme de verrouillage peut venir se loger en position fermée du capot dans un trou ménagé dans le capot, notamment dans la doublure de capot, ce trou étant configuré de sorte à autoriser la variation du verrou de la position de déblocage à la position de blocage, ou inversement.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- les figures 1 et 2 sont des vues en perspective, respectivement avant et arrière, d'un support de capot pour un premier mode de réalisation d'un système de montage selon l'invention,
- les figures 3 et 4 représentent en perspective partiellement un exemple d'agencement pour un véhicule automobile selon l'invention utilisant le support de capot des figures 1 et 2,
- la figure 5 est une vue en coupe d'un agencement utilisant le premier mode de réalisation, les éléments de positionnement étant désactivés,
- les figures 6 à 8 représentent en coupe un agencement utilisant un support de capot pour un deuxième mode de réalisation d'un système de montage selon l'invention respectivement à l'état désactivé, intermédiaire et activés des éléments de positionnement,
- les figures 9 et 10 représentent un exemple de mécanisme de verrouillage en configuration de déverrouillage,
- les figures 11 et 12 représentent le mécanisme de verrouillage en configuration de verrouillage.

### Description de modes préférentiels de l'invention

La description est faite en référence à un repère orthonormé (X, Y, Z) associé classiquement à un véhicule automobile, dans lequel X est la direction longitudinale avant - arrière du véhicule dirigée vers l'arrière, Y est la direction transversale droite-gauche qui est horizontale et perpendiculaire à X, dirigée vers la droite, et Z est la direction verticale dirigée vers le dessus.

Des références numérales identiques sont adoptées pour des éléments assurant une même fonction entre les deux modes de réalisation de support de capot d'un système de montage selon l'invention.

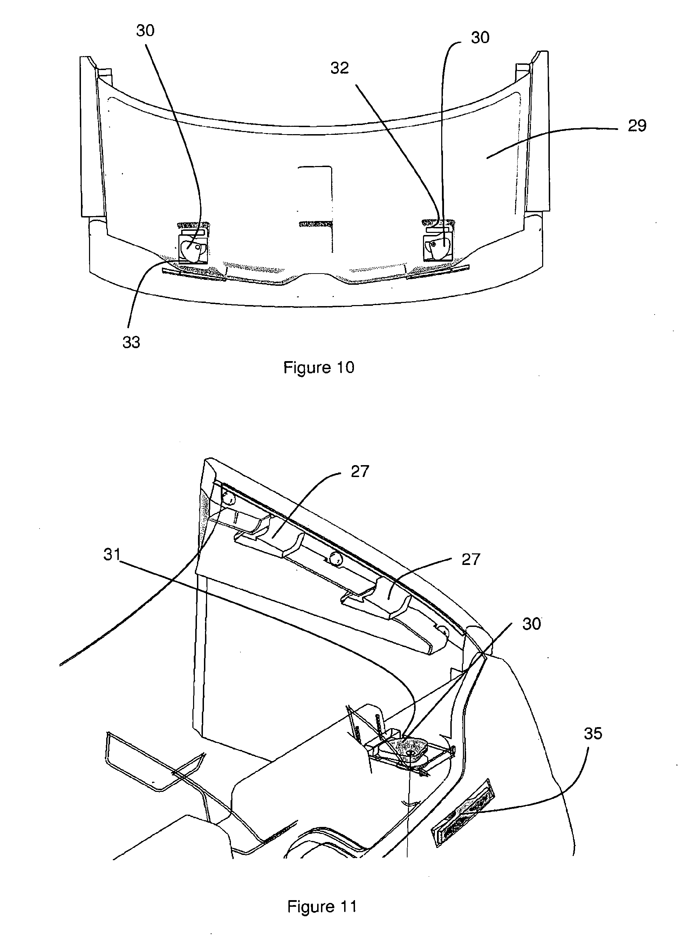

Un support de capot est destiné à coopérer avec un capot 29 (figure 10) au moins dans une position fermée du capot 29 dans laquelle le capot 29 ferme un compartiment moteur d'un véhicule automobile.

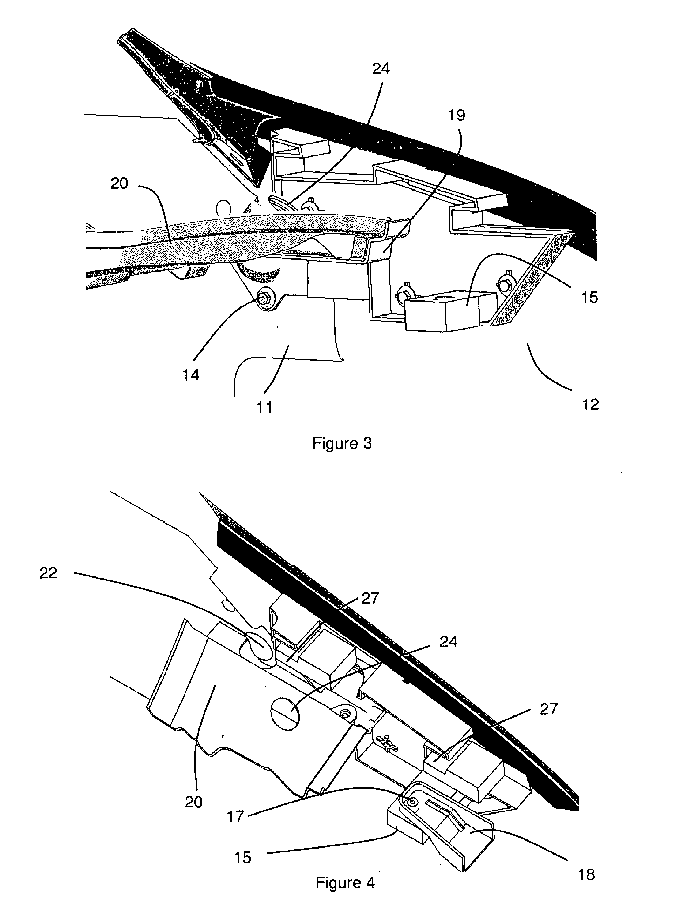

Le support de capot 10 comprend des éléments de fixation destinés à fixer le support de capot 10 sur au moins un élément associé de la caisse, notamment en assurant une fixation démontable du support de capot 10. Autrement dit, le support de capot 10 comprend une partie d'un moyen de fixation destiné à assurer la fixation démontable du support de capot 10 sur l'élément de caisse associé, cette partie de moyen de fixation coopérant pour cela avec une partie complémentaire du moyen de fixation portée par l'élément de caisse associé. En fonction de l'architecture en partie supérieure du compartiment moteur, les éléments de caisse auxquels le support de capot 10 est fixé peuvent être quelconques. A titre d'exemple, il peut s'agir d'une doublure d'un pied avant 11 et/ou un support d'aile 12 (figure 3). Ces moyens de fixation du support de capot 10 aux éléments de caisse 11, 12 peuvent être de toute nature, tel que des moyens de vissage, d'encliquetage ou équivalents. Les éléments de fixation qui équipent le support de capot 10 peuvent dès lors être de toute nature, par exemple comprendre au moins une ouverture 13 (ici au nombre de quatre) destinée à être traversée ensuite par une vis 14 solidaire de l'élément de caisse associé ou venant en prise dans ce dernier. Il peut alternativement s'agir d'un système boulon/écrou.

Selon une caractéristique importante détaillée plus loin, le support de capot 10 comprend des éléments de positionnement pouvant être activés pour coopérer avec le capot 29 de sorte à le maintenir en position fermée et configurés de sorte que :
- leur activation est obtenue par un coulissement du capot 29 par rapport au support de capot 10, notamment dans une direction sensiblement horizontale,
- et/ou leur coopération avec le capot 29 est telle que les éléments de positionnement interdisent tout déplacement ayant une composante verticale, entre le support de capot 10 et le capot 29.

Le support de capot 10 peut facultativement comprendre également des éléments de montage destinés à maintenir sur le support de capot 10 un ou plusieurs élément(s) fonctionnel(s) supplémentaire(s) définis ci-dessous, choisi(s) parmi la liste suivante :
- toute ou partie d'une boîte à eau (figures 3 et 4) destinée à récolter de l'eau et/ou à la séparer de l'air devant être acheminé à un circuit de ventilation du véhicule,
- au moins un projecteur lumineux destiné à assurer une fonction d'éclairage.

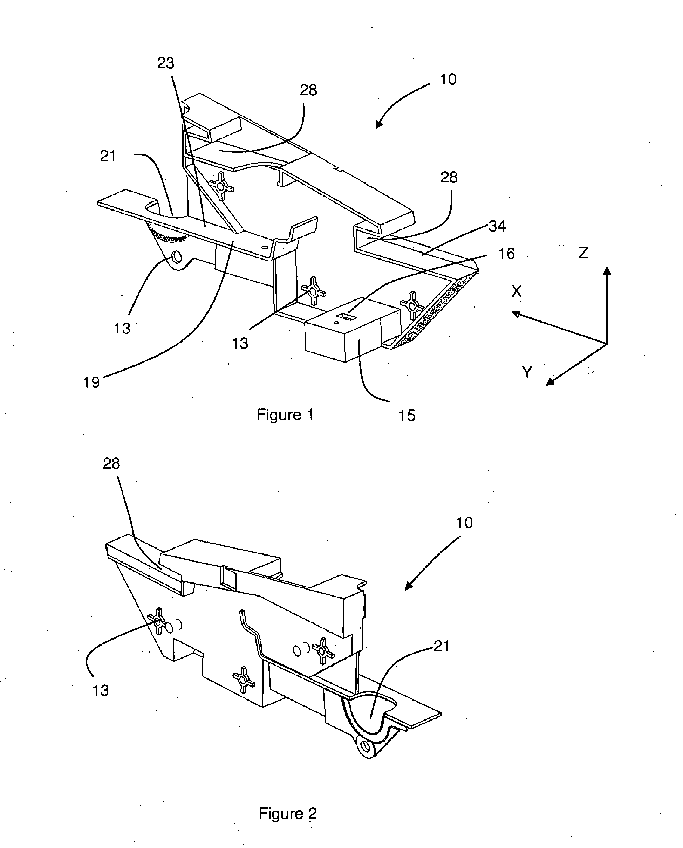

Dans le cas particulier où le support de capot 10 comprend des éléments de montage d'au moins un projecteur lumineux, ceux-ci peuvent être de toute nature, notamment suivant la construction de ce projecteur lumineux. Ils peuvent se présenter par exemple sous la forme d'une patte de fixation 15 agencée de sorte à déborder suivant Y par rapport au reste du support de capot 10, suivant le sens destiné à être tourné en direction de l'intérieur du compartiment moteur, opposé à l'aile latérale de carrosserie. La patte de fixation 15 peut comprendre une ouverture 16 (figure 1) pour le passage d'un organe de fixation 17 (figure 4) lui-même porté par un bras 18 solidaire du reste du projecteur lumineux (non représenté dans son intégralité). Les figures 3 et 4 qui représentent en perspective, partiellement, un exemple d'agencement pour un véhicule automobile selon l'invention utilisant le support de capot 10 des figures 1 et 2, illustrent ces éléments.

Dans le cas particulier où le support de capot 10 comprend des éléments de montage de tout ou partie d'une boîte à eau, ces éléments peuvent être de toute nature, notamment suivant la conception de cette boîte à eau. Les figures 1 à 4 représentent un cas particulier dans lequel le support de capot 10 comprend des éléments de montage destinés au maintien d'une partie uniquement de la boîte à eau, celle-ci étant avantageusement formée en trois parties pour améliorer sa facilité de mise en place. Ces éléments de montage solidaires du support de capot 10 comprennent avantageusement un élément d'extrémité 19 de fermeture de la boîte à eau, cet élément d'extrémité 19 étant donc solidaire du support de capot 10. L'élément d'extrémité 19 est configuré de sorte à pouvoir soutenir une extrémité longitudinale d'un élément central 20 de fermeture de la boîte à eau. Pour former une boîte à eau, il est donc nécessaire de prévoir deux supports 10 de part et d'autre de l'élément central 20 commun aux deux éléments d'extrémité 19.

L'élément central 20 est notamment destiné à récolter de l'eau provenant par exemple de l'écoulement sur le pare-brise du véhicule. Il peut aussi, éventuellement, servir à acheminer l'eau récoltée jusqu'à l'élément d'extrémité 19. C'est notamment le cas lorsque il est prévu un conduit d'évacuation 22 de l'eau déversée hors de la boîte à eau pour conduire l'eau au compartiment moteur situé sous la boîte à eau. L'eau s'écoule ensuite par exemple dans l'espace entre la doublure de pied avant 11 et l'aile latérale du véhicule. Il est dès lors avantageux de prévoir que l'élément d'extrémité 19 comprenne un élément de guidage 21 d'eau, par exemple sous forme d'une forme concave, configuré pour recueillir l'eau acheminée par l'élément central 20 et la canaliser hors du support de capot 10, jusqu'au conduit d'évacuation 22.

C'est pourquoi en référence aux figures 2 et 4 notamment, l'élément d'extrémité 19 de la boîte à eau, solidaire du support de capot 10, comprend, du côté dirigé vers l'élément de caisse sur lequel il est destiné à être fixé, une forme concave apte à canaliser dans la direction longitudinale de la boîte à eau, le déversement hors de la boîte à eau de l'eau recueillie par l'élément central 20. Il convient de préciser que classiquement mais non exclusivement, la direction longitudinale de la boîte à eau, correspondant à la direction de plus grande dimension de l'élément central 20 et le long de laquelle l'eau s'écoule globalement, est orientée parallèlement à la direction transversale Y au véhicule.

A titre d'exemple non limitatif, l'élément d'extrémité 19 comprend une face supérieure 23 en forme de rebord, sur laquelle l'extrémité longitudinale correspondante de l'élément central 20 est destinée à venir en appui par chevauchement depuis le dessus. Grâce à un tel aménagement, le montage de la boîte à eau sur la caisse peut se pratiquer avantageusement en deux temps :
- d'abord en fixant chacun des supports de capot 10 sur un élément 11, 12 associé de la caisse,
- puis en fixant l'élément central 20 de la boîte à eau sur les éléments d'extrémité 19 solidaires des supports 10 préalablement fixés à la caisse.

D'autre part, l'élément d'extrémité 19 comprend un élément d'étanchéité à l'eau destiné à être interposé entre l'élément d'extrémité 19 et l'élément central 20 dans la zone de chevauchement.

Par ailleurs, le support de capot 10 peut comprendre, au niveau de l'élément d'extrémité 19, un élément d'appui (non représenté) destiné à venir en appui de manière étanche sur une traverse supérieure de tablier de la caisse.

Comme indiqué précédemment, le support de capot 10 comprend donc des éléments de positionnement (détaillés plus loin) pouvant être configurés de sorte à interdire tout déplacement ayant une composante verticale entre le support de capot 10 et le capot 29 lorsqu'il est en position fermée. Autrement dit, par eux-mêmes et sans nécessiter d'autre moyen de maintien et de positionnement pour immobiliser le capot 29 vers le haut (déportés par rapport au support de capot 10), les éléments de positionnement solidaires du (des) support(s) 10 inhibent toute possibilité de translation du capot 29 suivant Z et/ou toute possibilité de rotation du capot 29 suivant Y et/ou X.

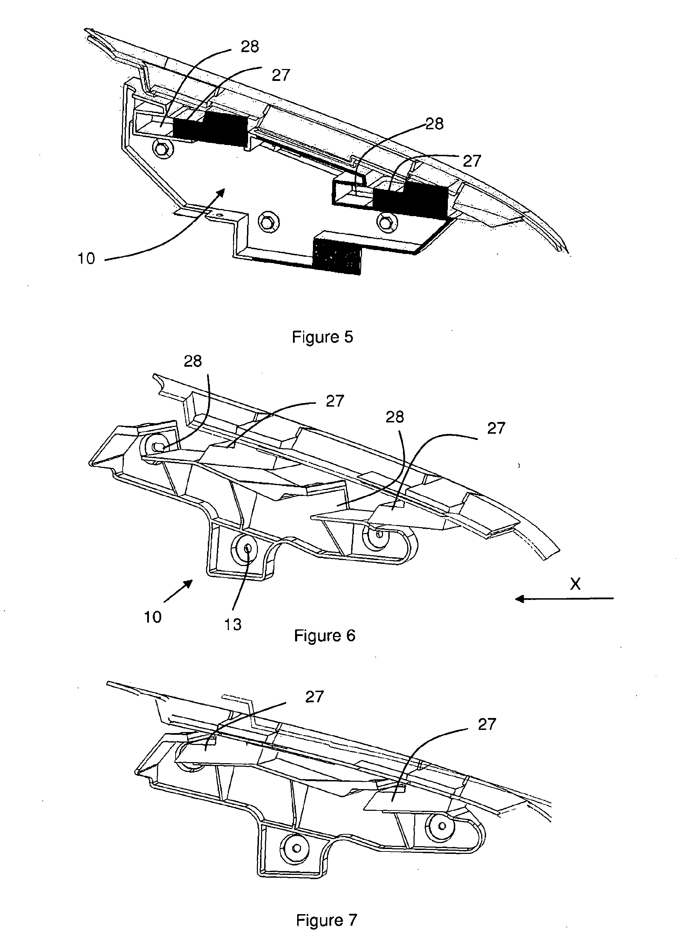

Comme illustré sur les figures 1 à 5 pour le premier mode de réalisation et sur les figures 6 à 8 pour le deuxième mode de réalisation, les éléments de positionnement solidaires du support de capot 10 comprennent au moins un premier organe destiné à s'engager par coulissement dans un deuxième organe solidaire du capot 29, lors d'un coulissement du capot 29 par rapport au support de capot 10 dans un premier sens (ici en direction de l'arrière du véhicule suivant X), notamment dans une direction sensiblement horizontale (ici selon X). Le désengagement du premier organe par rapport au deuxième organe solidaire du capot 29 se fait par coulissement du capot 29 par rapport au support de capot 10 dans un deuxième sens (ici en direction de l'avant du véhicule suivant X) opposé au premier. Les premier et deuxième organes respectivement solidaires du support 10 et du capot 29 peuvent être de toute nature. Dans le premier mode illustré, chacun des deux deuxièmes organes qui équipent le capot 29 comprend au moins une patte d'accrochage 27 (ici deux) venant s'insérer, lors du coulissement du capot 29 dans le premier sens (vers l'arrière du véhicule suivant X), dans un logement de retenue 28 correspondant qui équipe le premier organe du support de capot 10. Autrement dit, le support de capot 10 comprend au moins un logement de retenue 28, par exemple au nombre de deux, configuré pour permettre le montage à coulissement, suivant le premier sens, de la patte d'accrochage 27 correspondante solidaire du capot 29.

Il est possible de prévoir un montage inversé, à savoir que chacun des deux premiers organes qui équipent le support de capot 10 comprenne au moins une patte d'accrochage (non représentée) venant s'insérer, lors du coulissement du capot 29 dans le premier sens, dans un logement de retenue (non représenté) correspondant qui équiperait le deuxième organe du capot 29.

Bien que les deux modes de réalisation prévoient deux logements de retenue 28 associés à deux pattes d'accrochage 27, le support de capot 10 peut comporter un nombre de logements de retenue 28 différent de deux, par exemple un ou trois voire plus, et le deuxième organe du capot 29 peut comporter un nombre de patte 27 différents de deux. Dans le deuxième mode de réalisation (figures 6 à 8), seule la forme des logements 28 et des pattes 27 diffère par rapport au premier mode de réalisation. Les figures 6 à 8 représentent respectivement l'état désactivé, intermédiaire et activés des éléments de positionnement.

Lorsque chacune des pattes d'accrochage (qu'elle soit solidaire du capot 29 ou du support de capot 10) est engagée à coulissement dans le logement de retenue 28 correspondant (appartenant donc respectivement au support de capot 10 ou au capot 29, suivant la variante), le capot 29 est positionné et maintenu de sorte que tout déplacement du capot suivant Z est interdit.

Le fonctionnement ressort de ce qui précède, à savoir que les éléments de positionnement sont configurés de sorte à être activés par un coulissement du capot 29 par rapport au support de capot 10 dans un premier sens (ici en direction de l'arrière du véhicule suivant X) et à être désactivés par un coulissement du capot 29 par rapport au support de capot 10 dans un deuxième sens (ici en direction de l'avant du véhicule suivant X) opposé au premier sens, notamment dans une direction sensiblement horizontale (par exemple suivant X).

Par ailleurs, les éléments de positionnement comprennent au moins un élément de butée inférieure destinée à immobiliser le capot 29 vers le bas suivant Z lorsqu'il est en position fermée. Chacun de ces éléments de butée est constitué par exemple par le fond 34 (figure 1) d'un logement de retenue 28 donné.

Dans un mode de réalisation avantageux, le support de capot 10 est constitué par une pièce monobloc, d'un seul tenant, en matière plastique ou métallique notamment. Ceci présente l'avantage d'une facilité d'obtention, de manipulation, de stockage, etc.

De manière générale, il ressort de ce qui précède que le capot 29 comprend des éléments de maintien destinés à coopérer avec les éléments de positionnement du support de capot 10 précédemment décrits. Les éléments de maintien sont donc, par exemple, formés par l'aménagement d'au moins une patte d'accrochage 27 telle que définie précédemment. Toutefois, leur nature peut varier, notamment en fonction de la conception des éléments de positionnement qui équipent le support de capot 10.

Dans la formulation générale évoquée précédemment, les éléments de maintien comprennent le deuxième organe destiné à s'engager par coulissement dans le premier organe des éléments de positionnement du support de capot 10, lors du coulissement du capot 29 par rapport au support de capot 10 dans le premier sens.

Un tel support de capot 10 peut entrer dans la constitution d'un système de montage selon l'invention du capot 29 sur une caisse de véhicule automobile, comprenant pour cela au moins un tel support de capot 10 fixé à la caisse et un mécanisme de verrouillage variant entre une configuration de verrouillage interdisant la désactivation des éléments de positionnement et une configuration de déverrouillage autorisant l'activation des éléments de positionnement. Autrement dit, en configuration de déverrouillage, le coulissement entre le capot 29 et le support de capot 10 dans le premier sens est autorisé tandis qu'en configuration de verrouillage, le coulissement entre le capot 29 et le support de capot 10 dans le deuxième sens est interdit. Le mécanisme de verrouillage est disposé par exemple au niveau d'un bord avant du capot 29, à proximité de la calandre avant du véhicule.

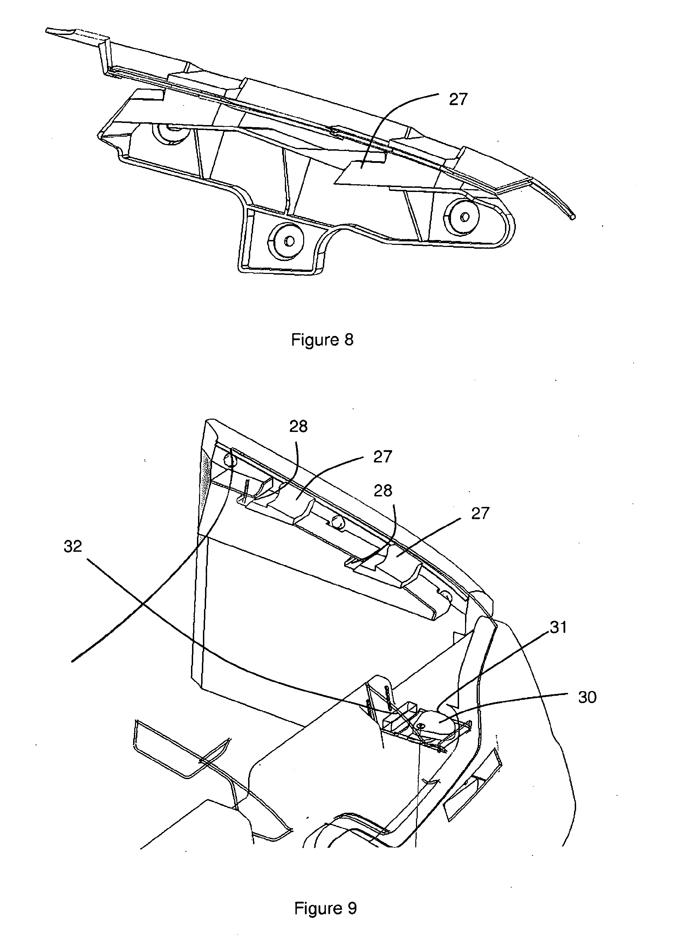

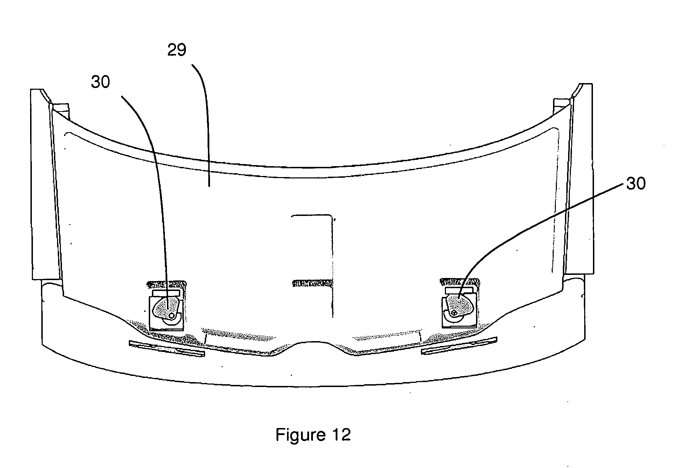

Comme représenté plus particulièrement sur les figures 9 à 12, le mécanisme de verrouillage peut être de toute nature, suivant notamment la conception des éléments de positionnement solidaires du support de capot 10. Le mécanisme de verrouillage peut comprendre au moins un verrou 30 (ici deux) variant entre une position de blocage correspondant à la configuration de verrouillage (figures 11 et 12) et une position de déblocage correspondant à la configuration de déverrouillage (figures 9 et 10). Le verrou 30 est muni d'une surface de came 31 (figure 11) configurée pour coopérer avec un élément d'appui 32 solidaire du capot 29 de sorte à entraîner le coulissement du capot 29 dans le premier sens lors du passage de la position de déblocage du verrou 30 à la position de blocage. Autrement dit, le mécanisme de verrouillage est configuré de sorte que, par appui de la surface de came 31 sur l'élément d'appui 32, le passage du mécanisme de verrouillage de la configuration de déverrouillage à la configuration de verrouillage provoque un coulissement du capot 29 par rapport au support de capot 10 dans le premier sens. Les figures 6 à 8 montrent les différentes étapes lors du passage de l'état désactivé à l'état activé des éléments de positionnement, au cours du passage de la configuration de déverrouillage à la configuration de verrouillage du mécanisme. Au cours de ce déplacement du capot 29 relativement au support de capot 10 et donc par rapport à la caisse, la surface de came 31 en cours de pivotement exerce une poussée contre l'élément d'appui 32 solidaire du capot 29, de sorte à venir engager les deux pattes 27 dans les deux logements 28.

La variation du verrou 30 de la position de déblocage à la position de blocage, ou inversement, se fait par rotation du verrou 30. Le verrou 30 est muni aussi d'un élément d'actionnement 35 (figure 11) tel qu'une tige ou équivalent, configuré de sorte à pouvoir commander la variation du verrou 30 de la position de déblocage à la position de blocage, ou inversement.

Chaque verrou 30 du mécanisme de verrouillage vient se loger en position fermée du capot dans un trou 33 ménagé dans le capot 29, notamment dans la doublure de capot, ce trou 33 étant configuré de sorte à autoriser la variation du verrou 30 de la position de déblocage à la position de blocage, ou inversement.

Un tel système de montage peut entrer dans la constitution d'un agencement pour un véhicule automobile selon l'invention, comprenant par ailleurs un capot destiné à occuper une position fermée pour fermer un compartiment moteur, notamment un capot 29 tel que précédemment décrit, monté sur une caisse d'un véhicule automobile grâce à un tel système de montage.

Il peut notamment être prévu deux supports de capot 10 décalés dans la direction transversale Y du véhicule de sorte à coopérer avec le capot 29 au niveau de deux bords latéraux du capot 29. Ceci favorise un maintien et un positionnement du capot 29 sur chacun de ses bords latéraux, lorsqu'il est en position fermée.

Ainsi, le montage d'un capot 29 sur une caisse de véhicule automobile, comprend une étape de coulissement du capot 29 par rapport à un support de capot 10 solidaire de la caisse, notamment dans une direction sensiblement horizontale (par exemple selon X), cette étape s'accompagnant d'une étape d'activation d'éléments de positionnement solidaires du support de capot 10 et configurés pour coopérer avec le capot 29 pour le maintenir en position fermée. Cette coopération peut être telle qu'ils interdisent tout déplacement ayant une composante verticale, entre le support de capot 10 et le capot 29.

La solution précédemment décrite permet de simplifier et de réduire le coût du montage du capot 29 sur la caisse d'un véhicule automobile. Le montage et le positionnement du capot 29 sur la caisse est une alternative par rapport à un montage par articulation ou par coulissement de l'art antérieur. Le maintien du capot en position fermée, contre un passage vers une position d'ouverture, est particulièrement simple, car les éléments nécessaires sont intégrés (à l'exclusion du mécanisme de verrouillage) dans chacun des supports de capot 10.

## Revendications

1. Système de montage d'un capot (29) sur une caisse de véhicule automobile comprenant, d'une part, au moins un support de capot (10) fixé à la caisse et comprenant des éléments de positionnement pouvant être activés pour coopérer avec le capot (29) de sorte à maintenir le capot (29) dans une position fermée dans laquelle le capot (29) ferme un compartiment moteur du véhicule automobile, les éléments de positionnement étant configurés de sorte à être activés et désactivés par un coulissement du capot (29) par rapport au support de capot (10) respectivement dans un premier sens et dans un deuxième sens opposés, notamment dans une direction (X) sensiblement horizontale, et, d'autre part, un mécanisme de verrouillage variant entre une configuration de verrouillage interdisant une désactivation des éléments de positionnement et une configuration de déverrouillage autorisant une activation des éléments de positionnement,
**système de montage caractérisé en ce que** le coulissement du capot (29) dans le premier sens est commandé par le passage du mécanisme de verrouillage de la configuration de déverrouillage à la configuration de verrouillage.

2. Système de montage selon la revendication 1, **caractérisé en ce que** les éléments de positionnement sont configurés de sorte que leur coopération avec le capot (29) est telle que les éléments de positionnement interdisent tout déplacement ayant une composante verticale, entre le support de capot (10) et le capot (29).

3. Système de montage selon l'une des revendications 1 ou 2, **caractérisé en ce que** les éléments de positionnement comprennent un élément de butée inférieure (34) destinée à immobiliser le capot (29) vers le bas lorsqu'il est en position fermée.

4. Système de montage selon l'une des revendications 1 à 3, **caractérisé en ce que** les éléments de positionnement comprennent au moins un premier organe destiné à s'engager par coulissement dans un deuxième organe solidaire du capot (29), lors du coulissement du capot (29) par rapport au support de capot (10) dans le premier sens.

5. Système de montage selon la revendication 4, **caractérisé en ce que** l'un des premier et deuxième organes comprend au moins une patte d'accrochage (27) venant s'insérer, lors du coulissement du capot (29) dans le premier sens, dans un logement de retenue (28) équipant l'autre des premier et deuxième organes.

6. Système de montage selon l'une des revendications 1 à 5, **caractérisé en ce que** le support de capot (10) est constitué par une pièce monobloc.

7. Système de montage selon l'une des revendications 1 à 6, **caractérisé en ce que** le support de capot (10) comprend des éléments de fixation (13) destinés à fixer le support de capot (10) sur au moins un élément associé d'une caisse de véhicule automobile, tel qu'un support d'aile (12) et/ou une doublure d'un pied avant (11).

8. Système de montage selon l'une des revendications 1 à 7, **caractérisé en ce que** le mécanisme de verrouillage comprend au moins un verrou (30) variant entre une position de blocage correspondant à la configuration de verrouillage et une position de déblocage correspondant à la configuration de déverrouillage.

9. Système de montage selon la revendication 8, **caractérisé en ce que** le verrou (30) est muni d'une surface de came (31) configurée pour coopérer avec un élément d'appui (32) du capot (29) de sorte à entraîner le coulissement du capot (29) dans le premier sens lors du passage de la position de déblocage du verrou (30) à la position de blocage.

10. Système de montage selon l'une des revendications 8 ou 9, **caractérisé en ce que** la variation du verrou (30) de la position de déblocage à la position de blocage, ou inversement, se fait par rotation du verrou (30).

11. Système de montage selon l'une des revendications 8 à 10, **caractérisé en ce que** le verrou (30) est muni d'un élément d'actionnement (35) configuré de sorte à pouvoir commander la variation du verrou (30) de la position de déblocage à la position de blocage, ou inversement.

12. Véhicule automobile comprenant un système de montage selon l'une des revendications 1 à 11 et un capot (29) monté sur une caisse du véhicule automobile grâce audit système de montage.

13. Véhicule selon la revendication 12, **caractérisé en ce qu**'il comprend deux supports de capot (10) décalés dans une direction transversale (Y) du véhicule de sorte à coopérer avec le capot (29) au niveau de deux bords latéraux du capot (29).

14. Véhicule selon l'une des revendications 12 ou 13, **caractérisé en ce que** le mécanisme de verrouillage est disposé au niveau d'un bord avant du capot (29), à proximité de la calandre avant du véhicule.

15. Véhicule selon l'une des revendications 12 à 14, **caractérisé en ce que** chaque verrou (30) du mécanisme de verrouillage vient se loger en position fermée du capot (29) dans un trou (33) ménagé dans le capot (29), notamment dans la doublure de capot, ce trou (33) étant configuré de sorte à autoriser la variation du verrou (30) de la position de déblocage à la position de blocage, ou inversement.

## Patentansprüche

1. System zur Montage einer Haube (29) auf einer Kraftfahrzeugkarosserie, das einerseits mindestens einen Haubenträger (10) umfasst, der an der Karosserie befestigt ist und Positionierungselemente umfasst, die aktiviert werden können, um mit der Haube (29) derart zusammenzuwirken, dass die Haube (29) in einer geschlossenen Position bleibt, in der die Haube (29) einen Motorraum des Kraftfahrzeugs schließt, wobei die Positionierungselemente derart ausgelegt sind, dass sie durch ein Gleiten der Haube (29) in Bezug auf den Haubenträger (10) jeweils in eine erste Richtung und in eine zweite entgegengesetzte Richtung aktiviert und deaktiviert werden, insbesondere in eine im Wesentlichen horizontale Richtung (X), und, andererseits, einen Verriegelungsmechanismus, der zwischen einer Verriegelungskonfiguration, die ein Deaktivieren der Positionierungselemente untersagt, und einer Entriegelungskonfiguration, die ein Aktivieren der Positionierungselemente gestattet, variiert,
wobei das Montagesystem **dadurch gekennzeichnet ist, dass** das Gleiten der Haube (29) in die erste Richtung durch die Passage des Verriegelungsmechanismus von der Entriegelungskonfiguration zu der Verriegelungskonfiguration gesteuert wird.

2. Montagesystem nach Anspruch 1, **dadurch gekennzeichnet, dass** die Positionierungselemente derart konfiguriert sind, dass ihr Zusammenwirken mit der Haube (29) derart ist, dass die Positionierungselemente jede Bewegung, die eine vertikale Komponente hat, zwischen dem Haubenträger (10) und der Haube (29) untersagen.

3. Montagesystem nach einem der Ansprüche 1 oder 2, **dadurch gekennzeichnet, dass** die Positionierungselemente ein unteres Anschlagelement (34) umfassen, das dazu bestimmt ist, die Haube (29) nach unten stillzustellen, wenn sie in geschlossener Position ist.

4. Montagesystem nach einem der Ansprüche 1 bis 3, **dadurch gekennzeichnet, dass** die Positionierungselemente mindestens ein erstes Organ umfassen, das dazu bestimmt ist, sich durch Gleiten in ein zweites Organ, das fest mit der Haube (29) verbunden ist, beim Gleiten der Haube (29) in Bezug zu dem Haubenträger (10) in eine erste Richtung einzufügen.

5. Montagesystem nach Anspruch 4, **dadurch gekennzeichnet, dass** eines des ersten und zweiten Organs mindestens eine Anhängpratze (27) umfasst, die sich beim Gleiten der Haube (29) in die erste Richtung in eine Halteaufnahme (28), die das andere des ersten und zweiten Organs ausstattet, einfügt.

6. Montagesystem nach einem der Ansprüche 1 bis 5, **dadurch gekennzeichnet, dass** der Haubenträger (10) aus einem einteiligen Teil besteht.

7. Montagesystem nach einem der Ansprüche 1 bis 6, **dadurch gekennzeichnet, dass** der Haubenträger (10) Befestigungselemente (13) umfasst, die dazu bestimmt sind, den Haubenträger (10) auf mindestens einem Element zu befestigen, das mit einer Kraftfahrzeugkarosserie verbunden ist, wie zum Beispiel einem Kotflügelträger (12) und/oder einer Auskleidung eines vorderen Ständers (11).

8. Montagesystem nach einem der Ansprüche 1 bis 7, **dadurch gekennzeichnet, dass** der Verriegelungsmechanismus mindestens einen Riegel (30) umfasst, der zwischen einer Blockierungsposition, die der Verriegelungskonfiguration entspricht, und einer Freigabeposition, die der Entriegelungskonfiguration entspricht, variiert.

9. Montagesystem nach Anspruch 8, **dadurch gekennzeichnet, dass** der Riegel (30) mit einer Nockenoberfläche (31) versehen ist, die ausgelegt ist, um mit einem Auflageelement (32) der Haube (29) derart zusammenzuwirken, dass das Gleiten der Haube (29) in die erste Richtung bei der Passage von der Freigabeposition des Riegels (30) zu der Blockierungsposition veranlasst wird.

10. Montagesystem nach einem der Ansprüche 8 oder 9, **dadurch gekennzeichnet, dass** die Variation des Riegels (30) von der Freigabeposition zu der Blockierungsposition oder umgekehrt durch Drehung des Riegels (30) erfolgt.

11. Montagesystem nach einem der Ansprüche 8 bis 10, **dadurch gekennzeichnet, dass** der Riegel (30) mit einem Betätigungselement (35) versehen ist, das derart ausgelegt ist, dass es die Variation des Riegels (30) von der Freigabeposition zu der Blockierungsposition oder umgekehrt steuern kann.

12. Kraftfahrzeug, das ein Montagesystem nach einem der Ansprüche 1 bis 11 und eine Haube (29) umfasst, die dank dem Montagesystem auf eine Karosserie des Kraftfahrzeugs montiert ist.

13. Fahrzeug nach Anspruch 12, **dadurch gekennzeichnet, dass** es zwei Haubenträger (10) umfasst, die in eine Querrichtung (Y) des Fahrzeugs derart versetzt sind, dass sie mit der Haube (29) im Bereich der zwei Seitenränder der Haube (29) zusammenwirken.

14. Fahrzeug nach einem der Ansprüche 12 oder 13, **dadurch gekennzeichnet, dass** der Verriegelungsmechanismus im Bereich eines Vorderrands der Haube (29) nahe dem vorderen Kühlergrill des Fahrzeugs angeordnet ist.

15. Fahrzeug nach einem der Ansprüche 12 bis 14, **dadurch gekennzeichnet, dass** sich jeder Riegel (30) des Verriegelungsmechanismus in geschlossener Position der Haube (29) in eine Bohrung (33), die in der Haube (29) angeordnet ist, insbesondere in der Auskleidung der Haube, einfügt, wobei diese Bohrung (33) derart ausgelegt ist, dass sie die Variation des Riegels (30) von der Freigabeposition zu der Blockierungsposition und umgekehrt gestattet.

## Claims

1. Mounting system for mounting a bonnet (29) on a motor vehicle body comprising, on the one hand, at least one bonnet support (10) fixed to the body and comprising positioning elements that can be activated to collaborate with the bonnet (29) so as to hold the bonnet (29) in a closed position in which the bonnet (29) closes an engine compartment of the motor vehicle, the positioning elements being configured so as to be activated and deactivated by a sliding of the bonnet (29) with respect to the bonnet support (10) in opposing first and second directions respectively, notably in a substantially horizontal direction (X) and, on the other hand, a locking mechanism varying between a locking configuration preventing deactivation of the positioning elements and an unlocking configuration allowing the activation of the positioning elements,
**which mounting system is characterized in that** the sliding of the bonnet (29) in the first direction is brought about by the passage of the locking mechanism from the unlocking configuration to the locking configuration.

2. Mounting system according to Claim 1, **characterized in that** the positioning elements are configured so that their collaboration with the bonnet (29) is such that the positioning elements prevent any movement that has a vertical component between the bonnet support (10) and the bonnet (29).

3. Mounting system according to one of Claims 1 and 2, **characterized in that** the positioning elements comprise a lower stop element (34) intended to immobilize the bonnet (29) in the downwards direction when it is in the closed position.

4. Mounting system according to one of Claims 1 to 3, **characterized in that** the positioning elements comprise at least one first member intended to engage in sliding in a second member secured to the bonnet (29), during the sliding of the bonnet (29) with respect to the bonnet support (10) in the first direction.

5. Mounting system according to Claim 4, **characterized in that** one of the first and second members comprises at least one catching tab (27) which, as the bonnet (29) slides in the first direction, becomes inserted in a retaining housing (28) with which the other of the first and second members is equipped.

6. Mounting system according to one of Claims 1 to 5, **characterized in that** the bonnet support (10) consists of a one-piece component.

7. Mounting system according to one of Claims 1 to 6, **characterized in that** the bonnet support (10) comprises fixing elements (13) intended to fix the bonnet support (10) to at least one associated element of a motor vehicle body, such as a wing support (12) and/or a front hinge pillar lining (11).

8. Mounting system according to one of Claims 1 to 7, **characterized in that** the locking mechanism comprises at least one lock (30) varying between a blocking position corresponding to the locking configuration and an unblocking position corresponding to the unlocking configuration.

9. Mounting system according to Claim 8, **characterized in that** the lock (30) is provided with a cam surface (31) configured to collaborate with a bearing element (32) of the bonnet (29) so as to cause the bonnet (29) to slide in the first direction as the lock (30) passes from the unblocking position to the blocking position.

10. Mounting system according to one of Claims 8 and 9, **characterized in that** the variation of the lock (30) from the unblocking position to the blocking position, or vice versa, is achieved by turning the lock (30).

11. Mounting system according to one of Claims 8 to 10, **characterized in that** the lock (30) is equipped with an actuating element (35) configured to be able to bring about the variation of the lock (30) from the unblocking position to the blocking position, or vice versa.

12. Motor vehicle comprising a mounting system according to one of Claims 1 to 11 and a bonnet (29) mounted on a body of the motor vehicle using the said mounting system.

13. Vehicle according to Claim 12, **characterized in that** it comprises two bonnet supports (10) that are offset in a transverse direction (Y) of the vehicle so as to collaborate with the bonnet (29) at the two lateral edges of the bonnet (29).

14. Vehicle according to one of Claims 12 and 13, **characterized in that** the locking mechanism is positioned at a front edge of the bonnet (29) near the front radiator grille of the vehicle.

15. Vehicle according to one of Claims 12 to 14, **characterized in that** each lock (30) of the locking mechanism is housed, when the bonnet (29) is in the closed position, in a hole (33) formed in the bonnet (29), notably in the bonnet lining, this hole (33) being configured to allow the variation of the lock (30) from the unblocking position to the blocking position or vice versa.
